# EUROPEAN PATENT SPECIFICATION

(11) **EP 1 178 150 B1**
(45) Date of publication and mention of the grant of the patent: **03.12.2003**
(21) Application number: 01306572.7
(22) Date of filing: 31.07.2001
(51) Int. Cl.: D06M 15/356, D06M 15/263, D06M 15/643, D06M 11/79

(54) **Diorganopolysiloxane/acrylate ester copolymer emulsion composition for fabric treatment**
Diorganopolysiloxan/Acrylat-Copolymer enthaltende Emulsionen zur Behandlung von Flächengebilden
Emulsion comprenant un copolymère de diorganopolysiloxane/acrylate pour le traitement des tissus

(30) Priority: 31.07.2000 JP 2000232245
(43) Date of publication of application: 06.02.2002
(73) Proprietor: Dow Corning Toray Silicone Co., Ltd., Tokyo (JP)
(72) Inventor: Ona, Isao, c/o Dow Corning Toray Silicone Co Ltd, Ichihara-shi, Chiba Prefecture, Tokyo (JP); Naganawa, Tsutomu, c/o Dow Corning Toray Silicone, Ichihara-shi, Chiba Prefecture, Tokyo (JP)
(74) Representative: Kyle, Diana

(56) References cited:
- EP-A- 0 457 616
- EP-A- 0 553 840
- EP-A- 0 565 093
- EP-A- 0 663 468
- US-A- 4 618 512

## Description

This invention relates to a diorganopolysiloxane/acrylate ester copolymer emulsion composition for treatment of fabrics. It also relates to fabrics treated with the emulsion composition. In particular, the diorganopolysiloxane/acrylate ester copolymer emulsion composition for fabric treatment cures at room temperature through removal of water, forming a flexible and highly flame retardant coating. The invention further relates to such highly flame retardant fabrics treated with the emulsion composition.

Acrylate ester polymers have been used as coatings for fabrics used for tents, rainwear, and ski wear due to their excellent film forming performance, weather resistance, oil resistance, and waterproofness, i.e., hydrostatic resistance. However, acrylate ester polymers have a low moisture permeability and a low water repellency, which has negative consequences for their application as coatings for raincoats or ski wear. Thus, the low moisture permeability results in the interior build up of water vapor, while the low water repellency necessitates the use of a water repellent. In addition, fabric coatings of acrylate ester polymer are subject to cracking during flexure at very low temperatures of - 30 °C or -40 °C.

Diorganopolysiloxane/acrylate ester copolymer emulsion compositions have been used as coating agents, as in British Patent 1161072 (August 3, 1969), Japanese Patent Publication(Kokoku) No. Sho 54-5007 (5,007/1979), and Japanese Patent Application Publication(Kokai) No. Hei 1-168972 (168,972/1989). However, these compositions do not have satisfactory film strength at very low temperatures, and are not able'to resist cracking at very low temperatures.

A diorganopolysiloxane/acrylate ester copolymer emulsion composition containing colloidal silica has been described Japanese Patent Application Publication(Kokai) No. Hei 5-287217 (287,217/1993). This emulsion composition has a low flame retardancy, and so it has not been used as a coating agent where flame retardancy is required, such as in automotive airbags or prefabricated tents. In addition, the emulsion is unable to provide an adequate flame retardancy when used as a binder for attachment of photocatalytic titanium oxide.

EP 0 457 616 discloses a coating composition for use in coating building materials which comprises (A) a polyorganosiloxane graft copolymer emulsion, (B) a reaction product between an amino functional silane and/or a hydrolyzates thereof and an acid anhydride, (C) colloidal silica, (D) a curing catalyst, and (E) an inorganic filler, which provides flame-retardant properties.

EP 0 565 093 discloses a composition for treating fabrics comprising (A) 100 parts by weight of diorganopolysiloxane emulsion comprising (a) 100 parts by weight of diorganopolysiloxane containing more than two silicon-bonded alkenyl groups in a single molecule and having the molecular chain end blocked with a hydroxy group, (b) 1-50 parts by weight of emulsifier, and (c) 50-1000 parts by weight of water; (B) 1-100 parts by weight of acrylic acid ester monomer; and adding and mixing with 100 parts by weight of the resulting copolymer (C) 1-100 parts by weight of colloidal silica, and (D) 0.001-1.5 parts by weight of a condensation- accelerating catalyst.

Therefore, it is an object of this invention is to provide a diorganopolysiloxane/acrylate ester copolymer emulsion composition for fabric treatment that cures at room temperature through removal of water to form a flexible, and highly flame-retardant coating that will not crack, even at very low temperatures. Another object is to provide highly flame retardant fabrics treated with the emulsion composition.

These and other features of the invention will become apparent from a consideration of the detailed description.

The diorganopolysiloxane/acrylate ester copolymer emulsion composition for fabric treatment according to the present invention contains (A) 100 weight parts of an emulsion of a copolymer formed from (a-1) an hydroxyl endblocked diorganopolysiloxane having at least two silicon bonded alkenyl groups in each molecule, and (a-2) an acrylate ester monomer; (B) 1-100 weight parts of colloidal silica; (C) 0.01-15.0 weight parts of a condensation catalyst; (D) 1-50 weight parts of an inorganic flame retardant and (E) 0.1-50 weight parts of an organic flame retardant selected from halogenated hydrocarbons, organophosphates, or silicones.

Diorganopolysiloxane component (a-1) is an hydroxyl endblocked siloxane that contains at least two silicon bonded alkenyl groups in each molecule. At least two alkenyl groups are required for radical copolymerization with component (a-2) to form strong and flexible coatings. The presence of hydroxyl groups at both molecular chain terminals is necessary to cause reaction through condensation with component (B) of a network polymer with a high degree of polymerization (DP) whose main chain is composed of only soft segments. The alkenyl group is exemplified by vinyl, allyl, and hexenyl groups, with vinyl groups being preferred. Non-alkenyl Si-bonded organic groups present in component (a-1) can be exemplified by alkyl groups such as methyl, ethyl, butyl, hexyl, and octyl; aryl groups such as phenyl; and substituted hydrocarbyl groups such as 3,3,3-trifluoropropyl. Methyl is the preferred non-alkenyl Si-bonded organic group. While the molecular structure of the diorganopolysiloxane should be straight chain, it may include a partially branched structure. Its kinematic viscosity at 25 °C should be 50-1,000,000 mm²/s, preferably 100-500,000 mm²/s.

Diorganopolysiloxanes (a-1) are exemplified by silanol endblocked methylvinylpolysiloxanes, silanol endblocked dimethylsiloxane-methylvinylsiloxane copolymers, silanol endblocked methylhexenylpolysiloxanes, and silanol endblocked dimethylsiloxane-methylhexenylsiloxane copolymers. They can be synthesized by (i) ring opening polymerization of cyclic diorganopolysiloxanes, (ii) hydrolysis and condensation of straight chain or branched diorganopolysiloxanes functionalized with hydrolyzable groups such as alkoxy or acyloxy groups, or (iii) hydrolysis of one or more diorganodihalosilanes.

Acrylate ester monomer component (a-2) is exemplified by monomers such as methyl acrylate, ethyl acrylate, butyl acrylate, octyl acrylate, methyl methacrylate, ethyl methacrylate, propyl methacrylate, butyl methacrylate, octyl methacrylate, 2-ethylhexyl methacrylate, and hydroxyethyl methacrylate. Component (a-2) should contain such monomers as its main constituent, but small amounts of other constituents may be included such as acrylic acid, methacrylic acid, acrylamide, acrylonitrile, vinyl chloride, styrene, α-methylstyrene, vinyl acetate, vinyltrialkoxysilanes, vinyltriacetoxysilane, or γ-methacryloxypropyltrimethoxysilane,

Emulsion component (A) can be prepared by first adding water (c) and emulsifying agent (b) to component (a-1) and preparing a diorganopolysiloxane emulsion; adding component (a-2) to the emulsion; and copolymerizing (a-1) and (a-2) in the presence of a radical polymerization initiator.

Emulsifying agent (b) functions to emulsify diorganopolysiloxane (a-1), and it can be an anionic or nonionic emulsifying agent. The anionic emulsifying agent can be the salt of a higher aliphatic acid, the salt of the sulfate ester of a higher alcohol, the salt of an alkylbenzene sulfonic acid, the salt of an alkylnaphthalene sulfonic acid, an alkylphosphonate, or the salt of the sulfate ester of a polyethylene glycol. The nonionic surfactant can be a polyoxyethylene alkylphenyl ether, an aliphatic acid ester of sorbitan, an aliphatic acid ester of polyoxyethylene sorbitan, the aliphatic acid ester of a polyoxyalkylene, or an aliphatic acid monoglyceride. The surfactant can be a single surfactant or a mixture of two or more surfactants.

Emulsifying agent (b) can be used in the amount of 1-50 weight parts per 100 weight parts of component (a-1), preferably 2-30 weight parts per 100 weight parts of component (a-1). Water (c) should be in sufficient quantity to enable preparation of an aqueous emulsion composition by emulsification of components (A)-(E) Water (c) can be present in the amount of 50-1,000 weight parts per 100 weight parts of component (a-1), preferably 100-500 weight parts per 100 weight parts of component (a-1). Acrylate ester monomer (a-2) should be used in the amount of 1-100 weight parts, preferably 5-50 weight parts, per 100 weight parts of the emulsion of components (a-1), (b), and (c). Radical polymerization initiators used for copolymerization can be exemplified by ammonium persulfate, potassium persulfate, hydrogen peroxide, azobisisobutyronitrile, dibutyl peroxide, and benzoyl peroxide.

Copolymer emulsions (A) can be prepared by the following method. First, in a homogenizer, octamethylcyclotetrasiloxane, and methyl and vinyl functional cyclic diorganosiloxanes, are emulsified using an anionic emulsifying agent such as dodecylbenzene sulfonic acid. Ring opening polymerization is carried out with heating to 70-90 °C. Polymerization is continued at lower temperatures of 10-40 °C to synthesize an emulsion of hydroxyl endblocked diorganopolysiloxane bearing pendant vinyl groups, i.e., component (a-1). This emulsion is heated to 80-85°C, radical polymerization initiator is added dropwise, the acrylate ester monomer (a-2) is added while stirring, and the polymerization reaction is allowed to continue for 5-8 hours. The product of this process is emulsion (A) containing the copolymer.

Colloidal silica (B) is the reinforcing crosslinker which strengthens the coating. It can be a material such as fumed colloidal silica, precipitated colloidal silica, or colloidal silica with a particle size of 0.0001-0.1 µm that has been stabilized by sodium or ammonium or aluminum. Component (B) should be used in the amount of 1-100 weight parts, preferably 2-50 weight parts, more preferably 5-30 weight parts, in each case, per 100 weight parts of emulsion (A).

Condensation catalyst (C) accelerates the condensation reaction between colloidal silica (B) and emulsion (A). Component (C) can be the metal salt of an organic acid such as dibutyltin dilaurate, dibutyltin diacetate, dibutyltin dioctate, tin laurate, and zinc octanoate; a titanate ester, such as tetrabutyl titanate, tetrapropyl titanate, and dibutoxy titanium bis(ethyl acetoacetate); or an amine compound such as n-hexylamine and guanidine, including hydrochlorides thereof. In preferred embodiments, the condensation catalyst is prepared in the form of an emulsion using an emulsifying agent and water. Component (C) can be used in the amount of 0.01-15.0 weight parts, preferably 0.05-10.0 weight parts, in each case per 100 weight parts of emulsion (A).

Inorganic flame retardant (D) is an essential component, and it is the component responsible for imparting flame retardancy to the emulsion composition. Component (D) is essential because base fabrics for prefabricated tent materials and automotive airbags are made of very flammable nylon and polyester fibers. In addition, base fabrics for photo catalytic titanium oxide loaded deodorizing curtains consist primarily of polyester substrates. Inorganic flame retardant (D) is exemplified by metal compounds such as antimony oxide, aluminum hydroxide, and chloroplatinic acid; and by phosphorus compounds such as chlorophosphonate and bromophosphonate. A single flame retardant or mixture of two or more flame retardants may be used. Antimony oxide and aluminum hydroxide are most preferred. Component (D) can be used in the amount of 1-50 weight parts, preferably 3-30 weight parts, in each case per 100 weight parts of emulsion (A). Flame retardancy will be inadequate at less than 1 weight part, while exceeding 50 weight parts of (D) not only reduces coating adherence to fabrics, but reduces strength of the coating. Flame retardant (D) can be used as a dispersion in water, or when it is intended to be knife coated on fabric, used as a paste by addition of small amounts of a thickener. When the viscosity becomes high, uniform dispersions can be prepared by mixing the microparticulate flame retardant with a mixing device.

The emulsion composition also contains organic flame retardants (E) in addition to inorganic flame retardant (D). The organic flame retardants (E) are halogenated hydrocarbons such as hexabromocyclododecane, chlorinated paraffins, chlorinated polyphenyls, and tetrabromobisphenol A; organophosphates such as diphenyl octyl phosphate and tributyl phosphate; and silicone flame retardants such as silicone resins and silicone powders. Component (E) is used in the amount of 0.1-50 weight parts in each case per 100 weight parts of emulsion (A).

Emulsification of the various components (A)-(E) is followed by adjustment of the pH to 9-12 and ageing, to promote thorough crosslinking of the components in the emulsion and enable formation of a solid, strong coating, simply by removal of the water component. The pH adjusting agent can be an organic amine such as dimethylamine, ethylenediamine, monoethanolamine, triethanolamine, morpholine, and 2-amino-2-methyl-1-propanol; or an alkali metal hydroxide such as sodium hydroxide and potassium hydroxide. Organic amines are preferred. The pH adjustment, as noted, is followed by ageing for a prescribed period of time and at a prescribed temperature. Ageing should be carried out at temperatures that will not break the emulsion. The.ageing temperature is typically 10-70 °C, preferably 20-50 °C. Ageing time should be established to correspond to ageing temperature, i.e., at least one week is preferred at 25 °C, whereas at least four days is preferred at 40 °C. The pH of the emulsion can be less than 9 when there is no requirement for room temperature storage stability.

Diorganopolysiloxane/acrylate ester copolymer emulsion compositions containing components (A)-(E) may contain suitable amounts of other components, including thickeners such as carboxymethylcellulose, methylcellulose, hydroxyethylcellulose, polyvinyl alcohol, polyacrylic acid or salt thereof; calcium carbonate; fillers; pigments; dyes; heat stabilizers; preservatives; and impregnants such as aqueous ammonia.

The diorganopolysiloxane/acrylate ester copolymer emulsion composition of the invention has an excellent room temperature storage stability, and it readily cures at room temperature through removal of the water fraction, to form a highly flame retardant coating that strongly adheres to fabrics. The resulting coatings exhibit excellent flexibility even at low temperatures such as -20 °C. Consequently, the composition is useful as a treating agent for fabrics used in the manufacture of tents, rain wear, ski wear, and automotive airbags. It is also useful as a binder for application of photo catalytic titanium oxide to curtains.

For purposes of the invention, the term *fabric* is intended to include weaves; knits; nonwovens; and papers made of natural, synthetic, semi-synthetic, regenerated, and inorganic fibers. Natural fibers are exemplified by hair, wool, silk, hemp, flax, cotton, angora, mohair, and asbestos. Synthetic fiber are exemplified by nylon, polyester, polyamide, polyacrylonitrile, polyvinyl chloride, vinylon, polyethylene, polypropylene, and spandex. Semi-synthetic fibers are exemplified by acetate. Regenerated fibers are exemplified by rayon and bemberg. Inorganic fibers are exemplified by glass fiber, carbon fiber, and silicon carbide fiber.

### EXAMPLES

The invention is explained in greater detail by the following working examples. Parts in these examples denotes weight parts and % denotes weight percent. Viscosity values were measured at 25 °C. Properties of the cured coatings and treated fabrics were evaluated using the following procedures.

### Coating Properties

Formation of Coating - A sheet formed by the coating was made by pouring 30 g of the diorganopolysiloxane/acrylate ester copolymer emulsion composition into an aluminum form which was 15 × 11 × 0.5 cm. It was then placed on a polytetrafluoroethylene sheet and maintained for three days at room temperature, i.e., about 25 °C.

Measurement of the Physical Properties of the Coating - A dumbbell shaped test specimen was prepared from a sheet produced in (1) above using a 3763-6W dumbbell die. The tensile strength (kgf/cm²) and elongation (percent) were measured on this test specimen at 25 °C and at -20 °C, with a pulling rate of 50 cm/minute using Tensilon Model UTM-1-2500SL instrument of Toyo Baldwin Kabushiki Kaisha.

Flexural Properties - Using a Mini subzero Model MC-71 instrument of Tabai Kabushiki Kaisha, a sheet with a size of 4 × 2 cm and a thickness of about 0.8 mm made as in (1) above, was maintained for two hours at 25 °C or -20 °C. One end of the sheet was then fixed in a pincette. A bending test was executed by elevating the other end. Evaluations were carried out using a scale where + indicated that absolutely no changes were seen even after 30 flexes, Δ indicated that breakage occurred at about the 10th flex, and × indicated that breakage occurred at the first flex.

### Fabric Properties

Fabric Coating - The diorganopolysiloxane/acrylate ester copolymer emulsion composition was coated with an applicator on a taffeta base fabric of 100 percent polyester used for prefabricated tents, so as to provide a film thickness of 30 µm. This was followed by drying the fabric for two days at room temperature, and then heat treating it for three minutes at 130 °C.

Hydrostatic Resistance and Water Repellency of the Fabric - The hydrostatic resistance in mm, and the water repellency, were measured respectively, according to Section 5.1 Water Resistance Method A, and Section 5.2 Water Repellency by Spray Testing, of the Japanese Industrial Standard (JIS) L 1092 methodology, entitled Test Methods for the Water Resistance of Fabrics.

Fabric Flame Retardancy - The oxygen index was measured by conducting the combustion test specified in Japanese Industrial Standard (JIS) K 7201, entitled Combustion Test Methods for Plastics using the Oxygen Index Method.

Adhesion by the Coating to the Fabric - The coating formed on the base fabric was strongly rubbed with a finger, and the adherence was evaluated by visual inspection using the three level scale noted below. Generally, low adherence will result in introduction of cracks in the coating followed by peeling and debonding from the base fabric. According to the three level scale, + indicated that cracking and debonding of the coating were not seen, and that the coating was strongly adhered; Δ indicated that some cracking appeared in the coating, and that some separation of the coating from the base fabric was seen; and × indicated that the coating debonded from the base fabric.

Coating Tackiness - The presence or absence of tackiness in the coating was evaluated using the scale noted below, based on a tactile sensation upon application of a fingertip. In the scale, + indicated that the coating was smooth and dry and that no tackiness was observed; Δ indicated that a slight tackiness could be perceived; and × indicated that the coating was very tacky.

### Example 1

Two parts of dodecylbenzene sulfonic acid and 53.64 parts of water were added to a mixture of 40 parts of a dimethylcyclic siloxane with a DP of four and 4 parts of a methylvinylcyclic siloxane with a DP of 4, and the combination was mixed to homogeneity for 30 minutes with a stirrer. The resulting mixture was passed twice through an homogenizer emulsifier at a pressure of 350 kg/cm² and provided a uniform emulsion. This emulsion was held for two hours at 85-90 °C and thereafter cooled to 20-30 °C and polymerized for three hours. 0.36 parts of sodium carbonate was added for neutralization. The product was an emulsion containing a dimethysiloxane-methylvinylsiloxane copolymer. It is referred to hereafter as base emulsion A. The extracted diorganopolysiloxane copolymer was a gum material with the average molecular formula:

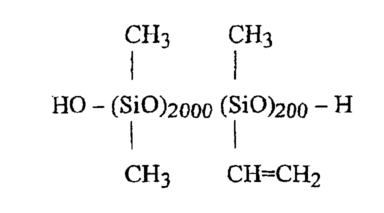

Four parts of methyl methacrylate was added to 90 parts of base emulsion A, and homogeneously dispersed by stirring for 30 minutes. The dispersion was transferred to a three neck flask, a previously prepared aqueous solution of 0.2 parts of potassium persulfate dissolved in 5.8 parts of water was added, and the reaction system was placed under a nitrogen blanket. The temperature was raised to 70-80 °C and held for three hours to carry out the polymerization. The product was an emulsion, hereafter referred to as emulsion A-1, containing a copolymer of methyl methacrylate with the dimethylsiloxane-methylvinylsiloxane copolymer. A drop of emulsion A-1 was placed on a glass plate and dried. The product was a completely transparent film which confirmed that the dimethylsiloxane-methylvinylsiloxane copolymer and methyl methacrylate had undergone homogeneous copolymerization. To 85.0 parts of emulsion A-1 were added 15 parts of colloidal silica, 0.2 parts of diethylamine as a pH adjusting agent, and 0.3 parts of a 50 percent emulsion containing dibutyltin dilaurate. This was followed by dissolution and dispersion to homogeneity. Ageing for one week at 45 ± 3 °C provided an emulsion A-2 having a pH of 11-12. To 100 parts of emulsion A-2 were added 8 parts of microparticulate aluminum hydroxide and 2 parts of hexabromocyclododecane. With mixing, this provided an emulsion composition referred to hereafter as emulsion composition A-3. The properties of the coating afforded by emulsion composition A-3 were measured, as well as properties of a polyester taffeta fabric that had been coated with emulsion composition A-3. The results are shown in Table 1.

As the results in Table 1 reveal, the cured coating from the diorganopolysiloxane/methyl methacrylate copolymer emulsion composition A-3 provided high values for tensile strength and elongation, and had a good flexibility at both low, i.e., - 20 °C, and ambient, i.e., 25 °C, temperatures. Moreover, the coating had good adherence to the base fabric, it was not tacky, and it had an excellent water resistance, i.e., hydrostatic resistance and water repellency, and flame retardancy. The polyester taffeta fabric treated with emulsion composition A-3 was confirmed to be very well suited for application to fabrics used in prefabricated tent making for very cold environments.

### Comparative Example 1

A diorganopolysiloxane/methyl methacrylate copolymer emulsion composition was prepared as in Example 1, but without adding colloidal silica, diethylamine, and the emulsion of dibutyltin dilaurate used in Example 1. The properties of the resulting emulsion composition were measured as in Example 1, and the results are shown in Table 1.

### Comparative Example 2

A diorganopolysiloxane/methyl methacrylate copolymer emulsion composition was prepared as in Example 1, but without adding diethylamine and the emulsion of dibutyltin dilaurate used in Example 1. The properties of the resulting emulsion composition were measured as in Example 1, and the results are shown in Table 1.

### Comparative Example 3

45 parts of water, 2.5 parts of the anionic surfactant sodium dodecylbenzene sulfonate, 1.5 parts of the nonionic surfactant polyoxyethylene (14.5) octyl phenyl ether, and 2 parts of sodium persulfate, were introduced into a four neck flask equipped with a separatory funnel and mixed to homogeneity. A mixture of 11 parts of methyl methacrylate and 33 parts of ethyl acrylate was added dropwise to the flask from the separatory funnel. After the completion of the addition, the reaction was maintained for 5 hours at 75 °C. The product was an emulsion of methyl methacrylate/ethyl acrylate copolymer. The properties of the emulsion were measured as in Example 1, and the results are shown in Table 1.

### Comparative Example 4

The properties of emulsion A-2 prepared in Example 1 were measured, and the results are shown in Table 1.

**Table 1.**

| Item Property Measured | Present Invention | Comparative Examples | | | |
|---|---|---|---|---|---|
| | Example 1 | Comparative Example 1 | Comparative Example 2 | Comparative Example 3 | Comparative Example 4 |
| Tensile Strength (kgf/cm²) | | | | | |
| @ 25 °C | 43 | 37 | 35 | ≥ 100 | 45 |
| @ - 20 °C | 46 | 52 | 50 | ≥ 100 | 49 |
| Elongation, percent | | | | | |
| @ 25 °C | 830 | 610 | 590 | 530 | 880 |
| @ - 20 °C | 810 | 550 | 530 | 2 . | 820 |
| Flexibility | | | | | |
| @ 25 °C | + | + | + | + | + |
| @ -20°C | + | Δ | Δ | × | + |
| Hydrostatic Resistance (mm) | ≥ 500 | ≥ 500 | ≥ 500 | ≥ 500 | ≥ 500 |
| Water Repellency | 80 | 80 | 80 | 50 | 80 |
| Oxygen Index | 18.3 | 22.1 | 22.2 | 23.0 | 23.5 |
| Adherence to Fabric | + | + | + | + | + |
| Coating Tack | + | Δ | Δ | + | + |
| Overall Evaluation as Tent Fabric in Very Cold Environments | Very Suitable | Unsuitable due to unsatisfactory Cold resistance | Unsuitable due to unsatisfactory Cold Resistance | Unsuitable due to unsatisfactory Cold Resistance and unsatisfactory Flame Retardancy | Unsuitable due to Unsatisfactory Flame Retardancy |

### Example 2

Emulsion composition A-3 prepared in Example 1 was adjusted to a content of 4 weight percent nonvolatile component and 96 weight percent water fraction, and poured into a rectangular vat. Polyester taffeta fabric used in the manufacture of prefabricated tents was immersed for 5 seconds in the bath, wrung out on a mangle roll at an expression ratio of 50 percent such that there was 2 weight percent add on to the taffeta fabric. It was dried overnight at room temperature, and heat-treated for three minutes at 130 °C. The properties of the resulting dip treated polyester taffeta fabric were measured, and the results are shown in Table 2. The results shown in Table 2 demonstrate that dip treatments with emulsion compositions A-3 produce fabric for very cold weather prefabricated tent material equivalent to fabrics produced in Example 1.

### Comparative Example 5

Polyester taffeta fabric used for manufacturing prefabricated tents was dip treated as in Example 2 using emulsions prepared in Comparative Examples 1-4. Post treatment properties were measured, and the results are shown in Table 2.

**Table 2.**

| | Example 2 | Comparative Example 5 | | | |
|---|---|---|---|---|---|
| Emulsion Used | Example 1 | Comparative Example 1 | Comparative Example 2 | Comparative Example 3 | Comparative Example 4 |
| Hydrostatic Resistance (mm) | ≥ 500 | ≥ 500 | ≥ 500 | ≥ 500 | ≥ 500 |
| Water Repellency | 80 | 80 | 80 | 50 | 80 |
| Oxygen Index | 18.2 | 22.4 | 22.3 | 23.2 | 23.6 |
| Adherence to Fabric | + | + | + | + | + |
| Overall Evaluation as Tent Fabric | Very Suitable | Unsuitable due to unsatisfactory Flame Retardancy | Unsuitable due to unsatisfactory Flame Retardancy | Unsuitable due to unsatisfactory Flame Retardancy | Unsuitable due to Unsatisfactory Flame Retardancy |

### Example 3

Two parts of dodecylbenzene sulfonic acid and 53.64 parts of water were added to a mixture of 40 parts of a dimethylcyclic siloxane with a DP of four and 4 parts of a methylvinylcyclic siloxane with a DP of 4, and the combination was mixed to homogeneity for 30 minutes with a stirrer. The resulting mixture was passed twice through an homogenizer emulsifier at a pressure of 350 kg/cm² and provided a uniform emulsion. This emulsion was held for two hours at 85-90 °C and thereafter cooled to 20-30 °C and polymerized for three hours. 0.36 parts of sodium carbonate was added for neutralization. The product was an emulsion containing a dimethysiloxane-methylvinylsiloxane copolymer. It is referred to hereafter as base emulsion A. The extracted diorganopolysiloxane copolymer was a gum material with the same average molecular formula shown in Example 1.

A pre-prepared aqueous solution of 0.25 g sodium persulfate dissolved in 5 parts water was added to 90 parts of base emulsion A, and the reaction system was held at 75-78 °C. A liquid mixture containing 5 parts of methyl methacrylate, 11 parts of butyl acrylate, and 15 parts of ethyl acrylate, was added dropwise to the base emulsion A in small aliquots from an addition funnel. Holding for three hours after completion of the addition provided emulsion B-1. When this copolymer containing emulsion B-1 was spontaneously dried in an aluminum cup, and then heated for 5 minutes at 130 °C, the result was a strong, almost transparent coating. This confirms that dimethylsiloxane-methylvinylsiloxane copolymer and the acrylic acid monomer had undergone homogeneous copolymerization. To 85.0 parts of emulsion B-1 were added to 15 parts of colloidal silica, 0.2 parts of diethylamine as the pH adjusting agent, and 0.3 parts of a 50 percent emulsion of dibutyltin dilaurate. The mixture was allowed to dissolve and then dispersed to homogeneity. It was aged for one week at 45 ± 3 °C to provide emulsion B-2. To 100 parts of emulsion B-2 were mixed and added 8 parts of microparticulate aluminum hydroxide and two parts of hexabromocyclododecane. This provided a composition referred to hereafter as emulsion composition B-3. One part of sodium polyacrylate was added to emulsion composition B-3 to adjust its viscosity to 20,000 mPa·s, and it was then coated with an applicator on polyester base fabric used for automotive airbags so as to provide a film thickness of 40 µm. The coated fabric was dried by allowing it to stand overnight at room temperature, and then it was heat treated for 5 minutes at 130 °C. The coating on the coated airbag fabric was tightly adhered to the surface. No tack was observed, and its oxygen index was an 18.2. These results confirmed that emulsion compositions according to the invention are very suitable for use as coatings for airbags.

### Example 4

Cashmere doeskin suit cloth of 100 percent polyester was dipped for 5 seconds in a 3 weight percent dilution of emulsion A-3 prepared in Example 1, wrung out on a mangle roll at a 100 percent expression ratio, and heated for 5 minutes at 150 °C. The resulting treated fabric was evaluated for handle by tactile manipulation. It was found to have a highly resilient and elastic handle. These results confirm that emulsion compositions according to the invention are well suited for application as dip treatments for synthetic fiber fabrics and textiles. The flameproofness was also evaluated by bringing the treated fabric into contact with the lighted end of a cigarette. The fabric did not melt, and no holes were produced even during contact for 30 seconds with the red combustion region of the cigarette. In contrast, an approximately 7.5 mm hole was produced in 5 seconds due to melting when untreated cashmere doeskin fabric was contacted with the lighted end of the cigarette.

Diorganopolysiloxane/acrylate ester copolymer containing emulsion compositions with components (A)-(E) possess the ability to form flexible, highly flame retardant coatings upon curing at room temperature through removal of the water fraction. Fabrics treated with these emulsion compositions also possess excellent flame retardancy.

Other variations may be made in compounds, compositions, and methods described herein without departing from the essential features of the invention. The embodiments of the invention specifically illustrated herein are exemplary only and not intended as limitations on their scope except as defined in the appended claims.

## Claims

1. A diorganopolysiloxane/acrylate ester copolymer containing emulsion composition for fabric treatment comprising (A) 100 weight parts of an emulsion containing a copolymer formed from (a-1) an hydroxyl endblocked diorganopolysiloxane having at least two silicon bonded alkenyl groups in each molecule and (a-2) an acrylate ester monomer; (B) 1-100 weight parts of colloidal silica; (C) 0.01-15.0 weight parts of a condensation catalyst; (D) 1-50 weight parts of an inorganic flame retardant; and (E) 0.1-50 weight parts of an organic flame retardant selected from halogenated hydrocarbons, organophosphates, or silicones.

2. A composition according to claim 1 wherein condensation catalyst (C) is a metal salt of an organic acid selected from dibutyltin dilaurate, dibutyltin diacetate, dibutyltin dioctate, tin laurate, and zinc octanoate; a titanate ester selected from tetrabutyl titanate, tetrapropyl titanate, and dibutoxy titanium bis(ethylacetoacetate); or an amine compound selected from n-hexylamine and guanidine.

3. A composition according to claim 1 or 2 wherein inorganic flame retardant (D) is aluminium hydroxide, antimony oxide, chlorophosphonate, or bromophosphonate.

4. A method of treating fabrics comprising applying to fabrics the composition according to any of claims 1 to 3.

5. A method according to claim 4 in which the composition is applied to the fabrics as a fabric dip.

6. A method according to claims 4 or 5 in which the fabric is a material used in manufacturing tents or automotive air bags.

7. A fabric treated in accordance with the method claimed in claims 4 or 5.

## Patentansprüche

1. Eine Diorganopolysiloxan/Acrylatester-Copolymer enthaltende Emulsionszusammensetzung zur Gewebebehandlung, enthaltend (A) 100 Gewichtsteile einer Emulsion, die ein Copolymer enthält, das aus (a-1) einem hydroxylendblockierten Diorganopolysiloxan mit mindestens zwei siliciumgebundenen Alkenylgruppen in jedem Molekül und (a-2) einem Acrylatestermonomer gebildet ist; (B) 1-100 Gewichtsteile kolloidale Kieselsäure; (C) 0.01-15,0 Gewichtsteile eines Kondensationskatalysators; (D) 1-50 Gewichtsteile eines anorganischen Flammenverzögerungsmittels und (E) 0,1-50 Gewichtsteile eines organischen Flammenverzögerungsmittels, ausgewählt aus halogenierten Kohlenwasserstoffen, Organophosphaten oder Siliconen.

2. Zusammensetzung nach Anspruch 1, worin Kondensationskatalysator (C) ein Metallsalz einer organischen Säure, ausgewählt aus Dibutylzinndilaurat, Dibutylzinndiacetat, Dibutylzinndioctat, Zinnlaurat und Zinnoctanoat; ein Titanester, ausgewählt aus Tetrabutyltitanat, Tetrapropyltitanat und Dibutoxytitanbis(ethylacetoacetat), oder eine Aminverbindung, ausgewählt aus n-Hexylamin und Guanidin, ist.

3. Zusammensetzung nach Anspruch 1 oder 2, worin das anorganische Flammenverzögerungsmittel (D) Aluminiumhydroxid, Antimonoxid, Chlorphosphonat oder Bromphosphonat ist.

4. Verfahren zur Behandlung von Geweben, umfassend Auftragen der Zusammensetzung nach einem der Ansprüche 1-3 auf Gewebe.

5. Verfahren nach Anspruch 4, in welchem die Zusammensetzung als ein Gewebetauchbad auf Gewebe aufgebracht wird.

6. Verfahren nach Anspruch 4 oder 5, in welchem das Gewebe ein Material ist, das zur Herstellung von Zelten oder Automobil-Airbags verwendet wird.

7. Gewebe, das gemäß dem Verfahren, das in Anspruch 4 oder 5 beansprucht ist, behandelt ist.

## Revendications

1. Emulsion contenant un copolymère diorganopolysiloxane/acrylate destinée au traitement de tissus comprenant (A) 100 parties en poids d'une émulsion contenant un copolymère formé à partir (a-1) d'un diorganopolysiloxane à extrémité de chaîne bloquée par un groupe hydroxyle, comprenant au moins deux groupes alcényle liés au silicium dans chaque molécule et (a-2) un monomère d'ester acrylate ; (B) 1 à 100 parties en poids de silice colloïdale ; (C) 0,01 à 15 parties en poids d'un catalyseur de condensation ; (D) 1 à 50 parties en poids d'un agent ignifuge inorganique ; et (E) 0,1 à 50 parties en poids d'un agent ignifuge organique choisi parmi les hydrocarbures halogénés, les organophosphates et les silicones.

2. Composition selon la revendication 1, dans laquelle le catalyseur de condensation (C) est un sel métallique d'un acide organique choisi parmi le dilaurate de dibutylétain, le diacétate de dibutylétain, le dioctanoate de dibutylétain, le laurate d'étain et l'octanoate de zinc ; un ester de titanate choisi parmi le titanate de tétrabutyle, le titanate de tétrapropyle et le bis(éthylacétoacétate) de dibutoxytitane ; ou un composé amino choisi entre la n-hexylamine et la guanidine.

3. Composition selon la revendication 1 ou 2, dans laquelle l'agent ignifuge inorganique (D) est l'hydroxyde d'aluminium, l'oxyde d'antimoine, le chlorophosphonate ou le bromophosphonate.

4. Procédé de traitement de tissus comprenant l'application sur des tissus de la composition selon l'une quelconque des revendications 1 à 3.

5. Procédé selon la revendication 4, dans lequel la composition est appliquée sur le tissu par immersion du tissu.

6. Procédé selon la revendication 4 ou 5, dans lequel le tissu est un matériau utilisé dans la fabrication de tentes ou dans la fabrication d'airbags pour automobile.

7. Tissu traité conformément au procédé selon la revendication 4 ou 5.
